# EUROPÄISCHE PATENTSCHRIFT

(11) **EP 3 129 919 B1**
(45) Veröffentlichungstag und Bekanntmachung des Hinweises auf die Patenterteilung: **23.12.2020**
(21) Anmeldenummer: 15715258.8
(22) Anmeldetag: 09.04.2015
(51) Int. Cl.: G06K 19/077, G09F 3/00, G09F 7/00, B29C 45/14, B29C 45/00, G09F 7/18

(54) **SCHILD FÜR EINE VERFAHRENSTECHNISCHE KENNZEICHNUNG**
PLATE FOR A PROCESS LABEL
PLAQUE D'IDENTIFICATION TECHNOLOGIQUE

(30) Priorität: 11.04.2014 DE 102014105242; 14.04.2014 DE 102014105323
(43) Veröffentlichungstag der Anmeldung: 15.02.2017
(73) Patentinhaber: Stell GmbH, 46395 Bocholt (DE)
(72) Erfinder: BRÖCKER, Michael, 46399 Bocholt (DE)
(74) Vertreter: Habbel, Ludwig
(86) Internationale Anmeldenummer: PCT/EP2015/057720
(87) Internationale Veröffentlichungsnummer: WO 2015/155288

(56) Entgegenhaltungen:
- EP-A1- 1 748 402
- EP-A1- 2 623 290
- WO-A1-00/73370
- US-A1- 2003 146 284
- US-A1- 2006 086 013
- US-A1- 2009 111 393
- US-A1- 2010 113 671

## Beschreibung

Die Erfindung betrifft ein Schild nach Anspruch 1. Aufgrund des enthaltenen RFID-Chips werden derartige Schilder auch als RFID-Schilder bezeichnet.

Aus der EP 1 748 402 A1, die den nächstkommenden Stand der Technik bildet, ist ein RFID-Schild bekannt, welches als flächiges Element aus drei Schichten besteht: als mittlere Schicht weist es den eigentlichen RFID-Chip auf, also einen elektronischen Schaltkreis samt Antenne, und auf einer sogenannten äußeren Oberfläche eine äußere Schutzschicht, die das RFID-Schild insbesondere vor mechanischen Beanspruchungen schützen soll. Auf der gegenüberliegenden Seite weist der RFID-Chip, also die mittlere Schicht des RFID-Schildes, eine so genannte innere Oberfläche auf, die als selbstklebende Schicht ausgestaltet ist und zusätzlich wärmeisolierend ausgestaltet sein kann. Ein solches RFID-Schild kann an einem Kunststoffkörper befestigt werden, wobei dieser Kunststoffkörper als Spritzgussbauteil, Blasformteil oder ähnliches Formteil ausgestaltet ist und eine Mulde bildet, in welcher das RFID-Schild bündig aufgenommen ist. Die äußere Oberfläche des gesamten Gegenstandes wird daher bereichsweise von dem Kunststoffkörper, und bereichsweise von der äußeren Schutzschicht des RFID-Schildes gebildet, wobei an der äußeren Oberfläche des gesamten Gegenstandes rings um das RFID-Schild eine Trennlinie bzw. Grenzlinie verläuft, entlang welcher das RFID-Schild an den Kunststoffkörper grenzt.

Aus der US 2006 / 086 013 A1 ist ein RFID-Schild bekannt, welches als Spielmünze in Casinos verwendet werden kann. Auch bei diesem RFID-Schild wird ein Kunststoffkörper geformt, in dessen Mulde der RFID-Chip angeordnet und mittels einer äußeren Schutzschicht abgedeckt wird. Die äußere Oberfläche des gesamten Gegenstandes - hier also der Spielmünze - wird daher auch gemäß dieser Druckschrift bereichsweise von dem Kunststoffkörper, und bereichsweise von der äußeren Schutzschicht des RFID-Schildes gebildet, wobei an der äußeren Oberfläche des gesamten Gegenstandes rings um das RFID-Schild eine Trennlinie bzw. Grenzlinie verläuft, entlang welcher das RFID-Schild an den Kunststoffkörper grenzt.

Aus der US 2010 / 011 36 71 A1 ist ein RFID-Schild bekannt, welches eine Mulde in einem Kunststoffkörper aufweist. In die Mulde ist der eigentliche RFID-Chip eingebettet. Eine äußere Schutzschicht aus einem Harz hüllt diesen RFID-Chip ein. Das RFID-Schild gemäß dieser Druckschrift ähnelt insofern den RFID-Schildern der beiden erstgenannten Druckschriften, als es zwischen zwei äußeren, umhüllenden Schichten angeordnet ist und zwischen diesen beiden Schichten eine Trennlinie bzw. Grenzlinie in der Oberfläche des gesamten Gegenstandes verläuft.

Schilder für verfahrenstechnische Kennzeichnungen sind Schilder, die in großen Industrieanlagen, wie beispielsweise Kraftwerken, der petrochemischen Industrie u. dgl. eingesetzt werden. Sie dienen nicht nur zur individuellen Kennzeichnung eines bestimmten Elements, wie beispielsweise einer Pumpe, eines Ventils o. dgl., sondern insbesondere dazu, den technischen Platz des bestimmten Elements innerhalb einer größeren industriellen Anlage präzise zu definieren, um auf diese Weise die Verfahrensführung präzise steuern zu können und beispielsweise Materialströme beeinflussen zu können oder mittels entsprechender Sensoren, Drücke, Temperaturen oder andere Eigenschaften von im Verfahren benutzten Materialien an einer präzise definierten Stelle des Verfahrensablaufs - und somit an einer präzise definierten Stelle der entsprechenden industriellen Anlage - bestimmen zu können.

Die regelmäßige Inspektion und ggf. Wartung der entsprechenden Anlagenkomponenten, die mit einer derartigen verfahrenstechnischen Kennzeichnung versehen sind, ist von großer Bedeutung für einen sicheren Betrieb der entsprechenden Anlage, um wenigstens die gewünschte Produktqualität eines mit der Anlage erzeugten Produkts sicherzustellen, zudem jedoch auch Schädigungen der Anlage selbst und insbesondere der Umwelt zuverlässig ausschließen zu können.

Zur Dokumentation der entsprechenden Inspektionen oder Wartungen dienen die RFID-Chips. In den Schildern zur problemlosen elektronischen Dokumentation der entsprechenden Wartungen bzw. Inspektionen ist wesentlich, dass die Reichweite des RFID-Chips nicht zu groß ist, um ggf. gegenseitige Beeinflussungen zuverlässig zu vermeiden, wenn mehrere Anlagenkomponenten, die jeweils mit einem Schild versehen sind, welches eine verfahrenstechnische Kennzeichnung trägt, auf kleinem Raum nahe benachbart angeordnet sind. Andererseits muss eine problemlose Auslesbarkeit des RFID-Chips sichergestellt sein, um einen unkomplizierten, schnellen und störungsfreien Arbeitsablauf bei der Inspektion bzw. Wartung und der zugehörigen Dokumentation sicherzustellen.

Der Erfindung liegt die Aufgabe zugrunde, ein gattungsgemäßes Schild dahingehend zu verbessern, dass dieses eine verliersichere und manipulationssichere Anordnung des RFID-Chips sicherstellt und einen Einsatz des Schildes unter rauen industriellen Einsatzbedingungen ermöglicht.

Diese Aufgabe wird durch ein Schild für eine verfahrenstechnische Kennzeichnung mit den Merkmalen des Anspruchs 1 gelöst. Vorteilhafte Ausgestaltungen sind in den Unteransprüchen beschrieben.

Die Erfindung schlägt mit anderen Worten vor, dass der Grundkörper aus einem Kunststoffmaterial besteht. Üblicherweise sind Schilder, die für eine verfahrenstechnische Kennzeichnung vorgesehen sind, aus Metall, um z. B. eine hohe Temperaturbeständigkeit sicherzustellen. Dabei ist es beispielsweise von den unter der Bezeichnung "i-sign" handelsüblichen Schildern der S+C Sign-Concepts GmbH, Rhede bekannt, die Schilder mit einer Durchgangsbohrung zu versehen, hinter welcher ein RFID-Chip angeordnet ist. Durch die Bohrung hindurch soll das Auslesen des Chips mit Hilfe eines entsprechenden Lesegeräts ermöglicht werden. Problematisch ist dabei allerdings, dass die Feldstärkelinien beim Funkkontakt mit dem RFID-Chip durch das Metall des Grundkörpers negativ beeinflusst bzw. abgeschwächt werden, so dass die Kommunikation zwischen Lesegerät und RFID-Chip erschwert ist. Bei nicht präziser Ausrichtung des Lesegeräts kann es daher zu einem Abriss der Funkkommunikation zwischen Lesegerät und Chip kommen. Alternativ kann daher vorgesehen sein, den RFID-Chip auf die Vorderseite des Metallschilds zu kleben, so dass eine gute Funkkommunikation möglich ist.

Bei den bekannten metallischen Schildern ist jedoch nicht ausgeschlossen, dass sich die Befestigung des RFID-Chips hinter der Öffnung im metallischen Grundkörper oder an der Vorderseite des metallischen Grundkörpers löst, aufgrund der im Betrieb üblichen Temperatur- bzw. Witterungseinflüsse oder chemischen Einflüsse, so dass beispielsweise ein Klebstoff nachgeben kann und der RFID-Chip nicht verliersicher angebracht ist.

Insbesondere ist die Befestigung des RFID-Chips bei diesen metallischen Grundkörpern nicht manipulationssicher, da der Chip bewusst entfernt werden kann. In einem unter Sicherheitsaspekten gefährlichen Szenario wäre es demnach möglich, die RFID-Chips von mehreren Schildern, die für eine verfahrenstechnische Kennzeichnung von Anlagenkomponenten dienen, von den jeweiligen Grundkörpern der Schilder zu entfernen und an anderer Stelle mit dem Lesegerät auszulesen, so dass Inspektions- oder Wartungsarbeiten auf elektronische Weise protokolliert werden könnten, die tatsächlich jedoch gar nicht stattgefunden haben. Insbesondere bei größeren industriellen Anlagen, bei denen beispielsweise Rohrleitungen und die in den Rohrleitungen angeordneten, mit den Schildern gekennzeichneten Komponenten wie Ventile, Sensoren o. dgl. im Freien angeordnet sind, und bei unwirtlichen klimatischen Verhältnissen mag eine solche Manipulation trotz der damit verbundenen Sicherheitsrisiken nicht auszuschließen sein.

Vorschlagsgemäß ist das Schild, welches für eine verfahrenstechnische Kennzeichnung vorgesehen ist und damit dementsprechenden Sicherheitsanforderungen genügen sollte, insofern manipulationssicher ausgestaltet, als der RFID-Chip allseitig von dem Material des Grundkörpers umschlossen ist. Der Grundkörper ist nämlich vorschlagsgemäß als Spritzgussbauteil ausgestaltet, welches den RFID-Chip einschließt. Auf diese Weise könnte der RFID-Chip nur unter Zerstörung des Grundkörpers entfernt werden, was optisch unmittelbar bei einer Sichtkontrolle auffällig wäre. Insbesondere wird bei einer derartigen Zerstörung des Schildes mit großer Wahrscheinlichkeit auch der RFID-Chip selbst zerstört, so dass anschließend beispielsweise betrügerische Protokollierungen nicht mehr möglich sind.

Um das vorschlagsgemäße Schild für eine verfahrenstechnische Kennzeichnung bei rauen industriellen Einsatzbedingungen zuverlässig langlebig auszugestalten, ist vorschlagsgemäß vorgesehen, dass das Kunststoffmaterial, aus welchem der Grundkörper besteht, einerseits den Kunststoff selbst enthält, sowie darin eingelagerte Körperchen, die aus einem mineralischen Material bestehen. Die Temperaturbeständigkeit des Schildes und insbesondere des Grundkörpers wird dementsprechend im Vergleich zu dem reinen Kunststoff, den der Grundkörper enthält, verbessert. Der Grundkörper weist daher eine Temperaturstabilität von wenigstens 100°C auf. Als Temperaturstabilität wird dabei die Eigenschaft des Grundkörpers bezeichnet, unter der angegebenen, auf den Grundkörper einwirkenden Temperatur seine Form beizubehalten, also eine entsprechende Formstabilität aufzuweisen.

Der Kunststoff bildet eine Art Matrix, in welche die erwähnten mineralischen Körperchen eingelagert sind. Der UV-Stabilisator wird im Rahmen des vorliegenden Vorschlags als Teil des Kunststoffs selbst angesehen, ebenso wie an sich bekannte Additive, die im Rahmen des vorliegenden Vorschlags nicht eigens erwähnt werden, einem Kunststoff verarbeitenden Fachmann jedoch geläufig sind.

Das Schild kann je nach dem vorgesehenen Einsatzzweck vollkommen oder weitgehend frei von UV-Stabilisatoren sein, beispielsweise wenn es in einem Raum verwendet werden soll, der gegen die Umgebung stark abgeschirmt ist, wie dies z. B. in einem Kernkraftwerk der Fall ist. Vorteilhaft kann der Grundkörper jedoch einen UV-Stabilisator aufweisen, so dass auch bei einer Anwendung des Schildes im Freien die gewünschte Langlebigkeit seines Kunststoff-Grundkörpers sichergestellt ist und beispielsweise vorzeitige Versprödungen, die zu einem Bruch des Grundkörpers führen könnten, vermieden sind. Welcher UV-Stabilisator verwendet wird, und in welcher Menge, wird dabei üblicherweise von einem Vorlieferanten bestimmt, der das zu verarbeitende Kunststoffmaterial liefert. Je nach Vorgaben des Schilder-Herstellers, die z. B. das vorgesehene regionale Einsatzgebiet und die sicherzustellende Mindest-Lebensdauer des Schildes umfassen, kann Der UV-Stabilisator ist dabei so dosiert, dass der Grundkörper den branchenüblich so genannten "Arizona-Test" besteht, also einen Freibewitterungstest, wie er beispielsweise von der Firma Q-LAB (www.q-lab.com) durchgeführt wird.

Vorteilhaft können die in den Kunststoff eingelagerten Körperchen als Glaskugeln ausgestaltet sein. Diese stellen im Unterschied beispielsweise zu Glasfasern eine hervorragende Verarbeitbarkeit des Kunststoffmaterials im Spritzguss auch dann sicher, wenn vergleichsweise flache Hohlräume in der Spritzgussform zuverlässig und vollständig ausgefüllt werden sollen. Derartige flache Hohlräume ergeben sich beispielsweise dort, wo der RFID-Chip in der Spritzgussform von dem Kunststoffmaterial des Grundkörpers umschlossen werden soll.

Vorteilhaft kann der Grundkörper weiße Farbpigmente enthalten, und zwar in der Weise, dass zumindest seine Vorderseite weiß eingefärbt ist. Die Vorderseite, die mit der eigentlichen Kennzeichnung versehen werden soll, beispielsweise bedruckt werden soll, ermöglicht auf diese Weise eine kontrastreiche Darstellung zu Gunsten einer optimalen Ablesbarkeit, wenn z. B. die Kennzeichnung dunkelblau oder schwarz auf den weißen Grundkörper gedruckt ist. Insbesondere im Bereich der verfahrenstechnischen Kennzeichnungen wird überwiegend eine weiße Vorderseite der entsprechenden Schilder aufgrund der kontraststarken Darstellung der Kennzeichnung und der dementsprechend optimalen Ablesbarkeit bevorzugt. Jedoch bietet eine weiße Vorderseite des Schildes auch die Möglichkeit einer farbtreuen Bedruckung mit anderen Farben aufgrund des neutralen und hellen Hintergrundes, den die weiße Vorderseite des Grundkörpers dazu bereitstellt. Dies kann beispielsweise gewünscht sein, wenn Schilder mit gelb-schwarzen Oberflächen hergestellt werden sollen.

Vorteilhaft kann der Grundkörper durchgefärbt sein, also Farbpigmente enthalten, die nicht nur im Bereich seiner Vorderseite konzentriert sind, sondern die im gesamten Grundkörper verteilt sind. Dies vereinfacht die Herstellung des Grundkörpers, indem nämlich ein Kunststoffmaterial im Spritzguss verarbeitet wird, welches als homogene Mischung die Farbpigmente gleichmäßig im Kunststoff verteilt enthält. Dadurch, dass die Farbpigmente im gesamten Grundkörper verteilt sind und der Grundkörper auf diese Weise durchgefärbt ist, ergibt sich auch ein Vorteil bei äußeren Beschädigungen des Schildes auf seiner Vorderseite, beispielsweise durch Kratzer. Dadurch, dass keine andere Farbe hinter einer solchen Oberflächenbeschädigung hervorscheint, wird die Ablesbarkeit der Kennzeichnung im Falle einer solchen Beschädigung möglichst wenig beeinträchtigt, da der Kratzer dort, wo er in einem nicht andersfarbig bedruckten Bereich der Vorderseite des Schildes auftritt, nur geringfügig optisch auffällt.

Vorteilhaft kann der Grundkörper Farbpigmente zu einem Gewichtsanteil von höchstens 2,5 % dort enthalten, wo diese Farbpigmente in dem sie umgebenden Material des Grundkörpers vorliegen. Wenn der Grundkörper durchgefärbt ist, weisen die Farbpigmente folglich einen Gewichtsanteil von höchstens 2,5 % des gesamten Grundkörpers auf. Durch diese Maximalkonzentration wird eine wirtschaftliche Herstellung des Schildes begünstigt, indem nämlich eine natürliche Oberflächenrauigkeit an der Vorderseite des Grundkörpers sichergestellt werden kann, die eine Bedruckung des Grundkörpers ohne aufwendige Vorbehandlung ermöglicht. Höhere Konzentrationen von Farbpigmenten im Bereich der zu bedruckenden Vorderseite des Grundkörpers machen die Vorderseite glatter und eliminieren die natürliche Oberflächenrauigkeit des Grundkörpers an seiner Vorderseite. Dies führt zu einer Beeinträchtigung der Farbanhaftung beim Bedrucken der Vorderseite. Durch eine aufwendige Vorbehandlung mit einer vergleichsweise komplizierten Verfahrensführung kann in diesem Fall die gewünschte Anhaftung der Druckfarbe erzielt werden, um eine langlebige Beschriftung des Schildes sicherzustellen. Durch die vorteilhaft gering zu haltende Konzentration der Farbpigmente kann der Aufwand für die Vorbehandlung und Bedruckung bei der Herstellung des Schildes vorteilhaft gering gehalten werden.

Vorteilhaft kann die Zugabe der mineralischen Körperchen so gewählt werden, dass der Grundkörper eine Temperaturstabilität von 150°C oder höher, beispielsweise sogar von wenigstens 170°C aufweist. In den meisten industriellen Anwendungsfällen werden solche Temperaturen kaum erreicht werden, so dass für die meisten Anwendungsfälle eine solche Temperaturstabilität eine hervorragende Langlebigkeit des Schildes durch Übererfüllung der Anforderungen sicherstellt. Aber auch wenn sehr hohe Temperaturen auftreten, wie dies beispielsweise bei petrochemischen Anlagen der Fall sein kann, stellt eine Temperaturstabilität von 170°C sicher, dass das Schild seine Aufgabe, eine verfahrenstechnische Kennzeichnung über lange Zeit gut lesbar zu ermöglichen, nach wie vor zuverlässig erfüllen kann. Durch die Temperaturstabilität wird unabhängig von der optisch lesbaren Kennzeichnung sichergestellt, dass das Schild sich beispielsweise nicht mechanisch von seinen Befestigungselementen löst, mit denen es an einem Schilderträger bzw. an einer Komponente einer Anlage befestigt ist.

Vorteilhaft kann der Grundkörper ein Thermoplast als Kunststoff aufweisen. Dies begünstigt die Verarbeitung des Kunststoffmaterials, welches für den Grundkörper verwendet wird, im Spritzgussverfahren.

Dabei kann vorteilhaft vorgesehen sein, dass der Grundkörper ein Polyamid als Kunststoff aufweist. Ein Polyamid-Kunststoff lässt sich einerseits als Thermoplast gut im Spritzguss verarbeiten, weist gute chemische und mechanische Werte hinsichtlich seiner Beständigkeit auf und ist weiterhin problemlos und zu wirtschaftlichen Konditionen handelsüblich erhältlich.

Vorteilhaft kann das Schild Abmessungen aufweisen, die im Wesentlichen 42 x 110 mm betragen. In der Praxis hat sich eine derartige Schildergröße als ausreichend erwiesen, um auch bei komplexen industriellen Anlagen eine Vielzahl von Komponenten eindeutig und in ausreichend großer, gut lesbarer Schrift, mit einer individuellen alphanumerischen verfahrenstechnischen Kennzeichnung versehen zu können. Gleichzeitig sind Schilder mit derartigen Abmessungen klein genug, um eine optische Sichtkontrolle der mit dem Schild gekennzeichneten Komponenten oder die Betätigung von deren Bedienelementen oder benachbarter Bauteile nicht zu beeinträchtigen. In der Praxis haben sich daher Schilder mit derartigen Abmessungen als ein Quasi-Standard mit internationaler Verbreitung etabliert.

Vorteilhaft kann vorgesehen sein, dass das Schild eine Dicke von höchstens 4 mm aufweist. Im Vergleich zu noch größeren Materialstärken wird auf diese Weise sichergestellt, dass beispielsweise Bedienelemente wie Schwenkhebel, Handräder o. dgl., wie sie beispielsweise zur Bedienung von Ventilen vorgesehen sind, optimal bedienbar bleiben. Aus diesem Grund, nämlich die Handhabungen der gekennzeichneten Komponenten selbst oder benachbarter Bauteile möglichst wenig zu beeinträchtigen, kann vorteilhaft das Schild sogar eine Dicke von höchstens 2,5 mm aufweisen, vorteilhaft sogar nur eine Dicke von 2 bis 2,2 mm.

Vorteilhaft kann der RFID-Chip als beschreibbarer Chip ausgestaltet sein. Als beschreibbar wird im Rahmen des vorliegenden Vorschlags ein Chip bezeichnet, der nicht vom Chip-Hersteller selbst mit einer Identifikationsnummer beschrieben worden ist, sondern der auch beim Abnehmer des Chips beschrieben werden kann. Dies kann entweder der Endkunde sein oder, wie im vorliegenden Fall, ein Zwischenkunde bzw. Dienstleister, der den Chip im Rahmen der Herstellung des vorschlagsgemäßen Schildes verwendet. Der beschreibbare Chip ermöglicht dabei diesem Endkunden oder auch den erwähnten Dienstleister eine frei definierbare Information in den Chip einzuschreiben, die später mittels des typischen Lesegeräts aus dem RFID-Chip ausgelesen werden kann. Üblicherweise ist jeder RFID-Chip vom Hersteller selbst mit einer weltweit einzigartigen, individuellen Seriennummer versehen. Der beschreibbare Chip ermöglicht darüber hinaus, den Chip mit der vom Dienstleister frei wählbaren Information zu beschreiben.

Dabei kann vorteilhaft vorgesehen sein, dass diese Information deckungsgleich ist mit der auf die Vorderseite des Schildes aufgedruckten verfahrenstechnischen Kennzeichnung. Beim Betreiber der industriellen Anlage ist beispielsweise in einem Plan der Anlage an einer bestimmten Stelle die entsprechende verfahrenstechnische Kennzeichnung vorgesehen, beispielsweise ein bestimmter Druck- oder Temperatursensor, ein Ventil, ein Strömungs- bzw. Durchflussmessgerät o. dgl. Diese verfahrenstechnische Kennzeichnung betrifft nicht die individuelle Kennung einer bestimmten Pumpe bzw. der entsprechenden Komponente: Wenn eine solche Komponente beispielsweise durch Alterung, Verschleiß, Defekt o. dgl. ausfällt, wird sie durch eine gleichartige Pumpe ersetzt. Die Ersatzpumpe kann dementsprechend eine andere individuelle Kennung aufweisen als die ursprünglich verwendete Pumpe, so dass beispielsweise der Pumpenhersteller anhand der individuellen Kennungen Informationen darüber erlangen kann, ob eine bestimmte Charge von Geräten aus einem bestimmten Herstellerwerk stammt, einen gewissen Serienfehler aufweist o. dgl. Auch die erwähnte Ersatzpumpe wird in der industriellen Anlage allerdings, trotz ihrer unterschiedlichen individuellen Pumpenkennung, mit derselben verfahrenstechnischen Kennzeichnung versehen wie die ursprüngliche Pumpe, da für den Betreiber der industriellen Anlage die verfahrenstechnische Kennzeichnung aussagt, dass an genau dieser Stelle der Anlage eine Pumpe mit bestimmten Leistungsdaten angeordnet ist. Für die optische Überprüfung der Anlage ist es daher vorteilhaft, wenn bei einer Sichtkontrolle die für den Menschen lesbare optische Kennzeichnung auf dem Schild identisch ist mit der im RFID-Chip gespeicherten maschinenlesbaren Kennzeichnung, und diese maschinenlesbare Kennzeichnung nach den Wünschen des Endanwenders auszugestalten wird dadurch ermöglicht, dass der RFID-Chip als beschreibbarer Chip ausgestaltet ist.

Vorteilhaft kann der Grundkörper zwei Durchgangsbohrungen aufweisen, die sich über die gesamte Dicke des Grundkörpers erstrecken, also von der Vorderseite zur Rückseite des Grundkörpers. Auf diese Weise ist eine Befestigung des Grundkörpers möglich, beispielsweise auf einem metallischen Schilderträger, indem der Grundkörper beispielsweise auf den Schilderträger aufgenietet wird. Dadurch, dass die Durchgangsbohrungen für die Niete bereitgestellt werden, können die Niete in den Grundkörper eingesetzt werden, ohne diesen zu beschädigen, z. B. ohne Risse im Grundkörper zu verursachen.

Ein Ausführungsbeispiel der Erfindung wird anhand der rein schematischen Darstellungen nachfolgend näher erläutert. Dabei zeigt
- Fig. 1: eine perspektivische Ansicht auf ein Schild, welches eine verfahrenstechnische Kennzeichnung trägt, und
- Fig. 2: einen Vertikalschnitt durch das Schild von Fig. 1 im Bereich um einen in das Schild integrierten RFID-Chip herum.

In den Zeichnungen ist mit 1 jeweils insgesamt ein Schild bezeichnet, welches einen Grundkörper 2 aufweist, der aus einem Polyamid-Kunststoff besteht, der mit mineralischen Körperchen gefüllt ist, wobei die Körperchen in Form von Glaskugeln ausgestaltet sind. Der Grundkörper 2 ist weiß durchgefärbt und weist einen Gewichtsanteil von 2% weißer Farbpigmente auf.

Der Grundkörper 2 weist eine Vorderseite 3 auf, die mit einer lediglich angedeutet dargestellten verfahrenstechnischen Kennzeichnung 4 in Form einer alphanumerischen Beschriftung bedruckt ist. Eine der Vorderseite 3 gegenüberliegende Rückseite 5 des Grundkörpers 2 ist frei von derartigen Kennzeichnungen. Da das Schild 1 mit dieser Rückseite 5 entweder einem Schilderträger anliegt oder unmittelbar der zu kennzeichnenden Komponente einer industriellen Anlage, ist dort keine optisch lesbare verfahrenstechnische Kennzeichnung vorgesehen. Andere optisch lesbare Kennzeichnungen, z. B. Hinweise auf den Hersteller bzw. das Herstelldatum des Schildes, Hinweise auf den für das Schild bzw. den Grundkörper 2 verwendeten Werkstoff, Hinweise betreffend den verwendeten RFID-Chip, oder dergleichen können hingegen auf der Rückseite 5 vorgesehen sein, oder zusätzlich zu der verfahrenstechnischen Kennzeichnung 4 auch auf der Vorderseite 3.

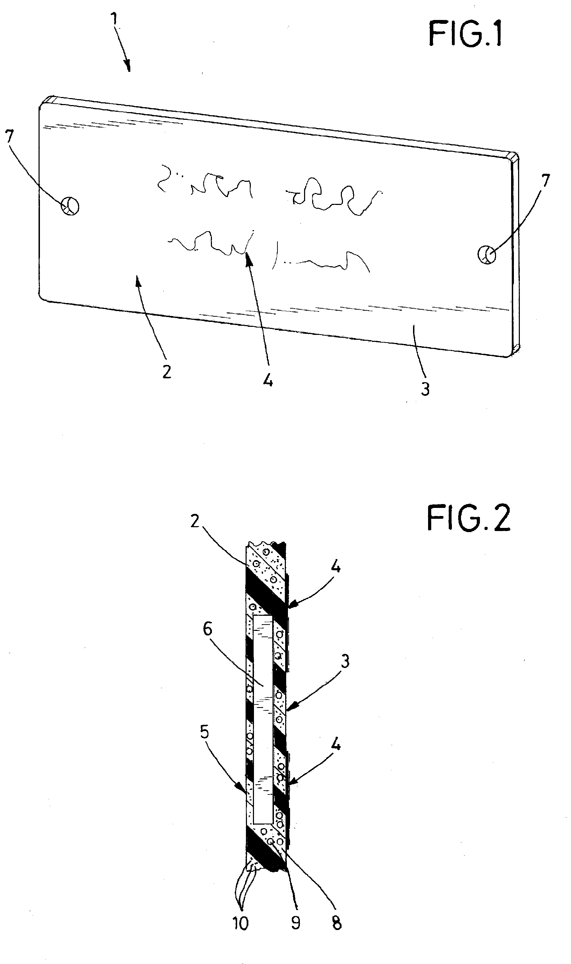

Der Grundkörper 2 ist als Spritzgussbauteil ausgestaltet und umgibt einen integrierten RFID-Chip 6, der in Fig. 2 ersichtlich ist. Dabei ist in Fig. 2 nicht der eigentliche elektronische Chip, und auch nicht die dem eigentlichen Chip zugeordnete Antenne dargestellt, sondern vielmehr ein Bauteil, in welches der eigentliche elektronische Chip sowie die daran angeschlossene Antenne integriert ist. Das ganze Bauteil wird im Rahmen des vorliegenden Vorschlags als RFID-Chip 6 bezeichnet. Derartige Bauteile sind in unterschiedlichen Abmessungen und Formgebungen handelsüblich. Es handelt sich bei dem dargestellten Ausführungsbeispiel um einen beschreibbaren RFID-Chip 6, der mit einer elektronischen, maschinenlesbaren Kennzeichnung versehen ist, die mit der optischen Kennzeichnung 4 identisch ist, die für den Menschen lesbar auf der Vorderseite 3 des Schildes 1 angebracht ist.

Aus Fig. 2 ist ersichtlich, dass der RFID-Chip 6 innerhalb des Grundkörpers 2 von der Vorderseite 3 weiter entfernt angeordnet ist als von der Rückseite 5. Da das Schild 1 ohnehin üblicherweise auf einem Schilderträger oder an einer Komponente einer industriellen Anlage montiert wird, ist die Rückseite des Schildes 1 daher gegen mechanische Einwirkungen wie Schläge, Stöße o. dgl. besser geschützt als die Vorderseite 3, so dass aus diesem Grund durch die außermittige Anordnung des RFID-Chips 6 der RFID-Chip 6 gegen mechanische Einwirkungen, die von der Vorderseite 3 her auf den RFID-Chip 6 einwirken, besonders gut geschützt ist.

Der Schnitt durch das Schild 1, der in Fig. 2 dargestellt ist, verläuft durch Material des Grundkörpers 2, welches den RFID-Chip 6 vollständig umgibt. Außerhalb der Schnittebene hingegen kann vorgesehen sein, dass das Material des Grundkörpers 2 eine Ausnehmung aufweist, die bis an den RFID-Chip 6 heranreicht. Derartige Ausnehmungen können beispielsweise verfahrenstechnisch vorteilhaft sein, wenn sich Halteelemente in den Spritzguss-Formhohlraum hinein erstrecken, welcher für die Herstellung des Grundkörpers 2 dient. Die Halteelemente dienen dazu, den RFID-Chip 6 innerhalb des Formhohlraums in einer definierten Position halten. Nachdem der Formhohlraum mit dem Kunststoffmaterial des Grundkörpers 2 gefüllt worden ist, können derartige Halteelemente zurückgezogen werden, so dass dementsprechend die erwähnten Ausnehmungen im Grundkörper 2 verbleiben, die bis an den RFID-Chip 6 heranreichen. Die Ausnehmungen können anschließend mit dem gleichen Kunststoffmaterial ausgefüllt werden, aus dem der Grundkörpers besteht. Sie können jedoch auch frei bleiben, insbesondere auf der Rückseite 5, wo der RFID-Chip 6 wie erwähnt gegen mechanische Belastungen gut geschützt ist..

Aus Fig. 1 ist ersichtlich, dass Durchgangsbohrungen 7 in dem Schild 1 vorgesehen sind, die sich durch die gesamte Dicke des Grundkörpers 2 erstrecken, also von der Vorderseite 3 bis zur Rückseite 5.

Aus Fig. 2 ist ersichtlich, dass der Grundkörper 2 aus einem Kunststoffmaterial besteht, welches einen Kunststoff 8 enthält, nämlich bei dem dargestellten Ausführungsbeispiel einen Polyamid-Kunststoff, der in Art einer homogenen Mischung einen UV-Stabilisator sowie ggf. weitere, an sich bekannte Additive enthält. In diesen Kunststoff 8 sind Glaskugeln 9 als mineralische Körperchen eingelagert, welche die Temperaturbeständigkeit des Kunststoffmaterials 8 verbessern. Weiterhin sind in den Kunststoff 8 Farbpigmente 10 eingemischt, so dass der Grundkörper 2 weiß durchgefärbt ist. Sowohl die Größe als auch die Verteilung der Glaskugeln 9 und der Farbpigmente 10 sind in Fig. 2 rein schematisch angedeutet und müssen nicht den tatsächlichen Verhältnisse entsprechen.

## Patentansprüche

1. Schild (1),
mit einem die Abmessungen des Schildes (1) im Wesentlichen bestimmenden Grundkörper (2),
und mit einem RFID-Chip (6),
wobei das Schild (1) eine Kennzeichnungs- oder Vorderseite (3) aufweist
sowie eine gegenüberliegende Rückseite (5), der Grundkörper (2) als Spritzgussbauteil aus einem Kunststoffmaterial besteht,
und der Grundkörper (2) als Spritzgussbauteil den RFID-Chip (6) einschließt,
**dadurch gekennzeichnet,**
**dass** das Schild (1) als Schild (1) für eine verfahrenstechnische Kennzeichnung dient,
der Grundkörper (2) eingelagerte Körperchen aus einem mineralischen Material in der Art enthält, so dass der Grundkörper (2) eine die Formstabilität des Schildes (1) sicherstellende Temperaturstabilität von wenigstens 100°C aufweist,
wobei und dass der RFID-Chip (6) allseitig von dem Material des Grundkörpers (2) umschlossen ist.

2. Schild nach Anspruch 1,
**dadurch gekennzeichnet,**
**dass** der Grundkörper (2) einen UV-Stabilisator enthält.

3. Schild nach Anspruch 1 oder 2,
**dadurch gekennzeichnet,**
**dass** die eingelagerten Körperchen als Glaskugeln (9) ausgestaltet sind.

4. Schild nach einem der vorhergehenden Ansprüche,
**dadurch gekennzeichnet,**
**dass** der Grundkörper (2) weiße Farbpigmente (10) enthält, derart, dass zumindest seine Vorderseite (3) weiß eingefärbt ist.

5. Schild nach einem der vorhergehenden Ansprüche,
**dadurch gekennzeichnet,**
**dass** der Grundkörper (2) Farbpigmente (10) enthält, die im gesamten Grundkörper (2) verteilt sind, derart, dass der Grundkörper (2) durchgefärbt ist.

6. Schild nach einem der vorhergehenden Ansprüche,
**dadurch gekennzeichnet,**
**dass** der Grundkörper (2) Farbpigmente (10) enthält, die einen Gewichtsanteil von höchstens 2,5 % in dem die Farbpigmente (10) umgebenden Material des Grundkörpers (2) aufweisen.

7. Schild nach einem der vorhergehenden Ansprüche,
**dadurch gekennzeichnet,**
**dass** der Grundkörper (2) eine Temperaturstabilität von wenigstens 170°C aufweist.

8. Schild nach einem der vorhergehenden Ansprüche,
**dadurch gekennzeichnet,**
**dass** der Grundkörper (2) ein Thermoplast als Kunststoff aufweist.

9. Schild nach Anspruch 8,
**dadurch gekennzeichnet,**
**dass** der Grundkörper (2) ein Polyamid als Kunststoff aufweist.

10. Schild nach einem der vorhergehenden Ansprüche,
**dadurch gekennzeichnet,**
**dass** das Schild (1) Abmessungen von im Wesentlichen 42 x 110 mm aufweist.

11. Schild nach einem der vorhergehenden Ansprüche,
**dadurch gekennzeichnet,**
**dass** das Schild (1) eine Dicke von höchstens 4 mm aufweist.

12. Schild nach Anspruch 11,
**dadurch gekennzeichnet,**
**dass** das Schild (1) eine Dicke von höchstens 2,5 mm aufweist.

13. Schild nach einem der vorhergehenden Ansprüche,
**dadurch gekennzeichnet,**
**dass** der RFID-Chip (6) beschreibbar ausgestaltet ist, derart, dass eine frei definierbare, auslesbare Information in den RFID-Chip (6) einschreibbar ist, zusätzlich zu einer gegebenenfalls vom Hersteller des RFID-Chips (6) in den RFID-Chip (6) eingeschriebenen individuellen Seriennummer des RFID-Chips (6).

14. Schild nach einem der vorhergehenden Ansprüche,
**dadurch gekennzeichnet,**
**dass** der Grundkörper (2) zwei Durchgangsbohrungen (7) aufweist, die sich von der Vorderseite (3) zur Rückseite (5) des Grundkörpers (2) erstrecken.

## Claims

1. Plate (1), having a base body (2) that essentially determines the dimensions of the plate (1) and having an RFID chip (6),
where the plate (1) incorporates a mark-bearing or front face (3) and an opposing rear face (5) and the base body (2), which is an injection-moulded component, is made from a plastic material, and the base body (2), which is an injection-moulded component, encloses the RFID chip (6),
**characterised in**
**that** the plate (1) is used as a plate (1) for marking during technical processes and the base body (2) contains embedded particles made from a mineral material such that the base body (2) has a temperature stability of at least 100 °C that ensures the shape stability of the plate (1),
where and that the RFID chip (6) is enclosed by the material of the base body (2) on all sides.

2. Plate in accordance with claim 1, **characterised in**
**that** the base body (2) contains a UV stabiliser.

3. Plate in accordance with claim 1 or claim 2, **characterised in**
**that** the embedded particles are in the form of glass balls (9).

4. Plate in accordance with any one of the preceding claims, **characterised in**
**that** the base body (2) contains white colour pigments (10) such that at least its front face (3) is coloured white.

5. Plate in accordance with any one of the preceding claims, **characterised in**
**that** the base body (2) contains colour pigments (10) that are spread throughout the entire base body (2), such that the base body (2) is coloured right through.

6. Plate in accordance with any one of the preceding claims, **characterised in**
**that** the base body (2) contains colour pigments (10) that make up a maximum proportion by weight of 2.5 % in the material of the base body (2) enclosing the colour pigments (10).

7. Plate in accordance with any one of the preceding claims, **characterised in**
**that** the base body (2) has a temperature stability of at least 170 °C.

8. Plate in accordance with any one of the preceding claims, **characterised in**
**that** the base body (2) contains a plastic which is a thermoplastic.

9. Plate in accordance with claim 8, **characterised in**
**that** the base body (2) contains a plastic which is a polyamide.

10. Plate in accordance with any one of the preceding claims, **characterised in**
**that** the plate (1) has essentially the dimensions 42 x 110 mm.

11. Plate in accordance with any one of the preceding claims, **characterised in**
**that** the plate (1) has a maximum thickness of 4 mm.

12. Plate in accordance with claim 11, **characterised in**
**that** the plate (1) has a maximum thickness of 2.5 mm.

13. Plate in accordance with any one of the preceding claims, **characterised in**
**that** the RFID chip (6) is designed so that it can be written on in such a way that freely specifiable, readable information can be written into the RFID chip (6) in addition to an individual serial number of the RFID chip that is, if necessary, written into the RFID chip (6) by the manufacturer of the RFID chip.

14. Plate in accordance with any one of the preceding claims, **characterised in**
**that** the base body (2) incorporates two through-holes (7) that extend from the front face (3) to the rear face (5) of the base body (2).

## Revendications

1. Plaque (1) composée d'un corps de base (2) déterminant pour l'essentiel les dimensions de la plaque (1), et composée d'une puce RFID (6),
sachant que la plaque (1) présente un côté d'identification ou recto (3), ainsi qu'un verso (5) situé en face, que le corps de base (2) est un composant moulé en matière plastique injectée, et que le corps de base (2) enrobe, en tant que composant moulé en matière injectée, la puce RFID (6),
**caractérisée en ce**
**que** la plaque (1) sert de plaque (1) d'identification technologique, **en ce que** le corps de base (2) contient des particules en matériau minéral stockées dedans de sorte que le corps de base (2) présente une stabilité à la température d'au moins 100 °C assurant la stabilité de forme de la plaque (1),
sachant que et **en ce que** la puce RFID (6) est enrobée sur tous les côtés par le matériau du corps de base (2).

2. Plaque selon la revendication 1, **caractérisée en ce**
**que** le corps de base (2) contient un stabilisateur aux UV.

3. Plaque selon la revendication 1 ou 2, **caractérisée en ce**
**que** les particules stockées à l'intérieur sont configurées en billes de verre (9).

4. Plaque selon l'une des revendications précédentes, **caractérisée en ce**
**que** le corps de base (2) contient des pigments (10) de couleur blanche, de sorte qu'au moins son recto (3) est coloré en blanc.

5. Plaque selon l'une des revendications précédentes, **caractérisée en ce**
**que** le corps de base (2) contient des pigments de couleur (10) répartis dans l'ensemble du corps de base (2) de sorte que le corps de base (2) est coloré dans la masse.

6. Plaque selon l'une des revendications précédentes, **caractérisée en ce**
**que** le corps de base (2) contient des pigments de couleur (10) présentant une part pondérale d'au maximum 2,5 % dans le matériau du corps de base (2) enrobant les pigments de couleur (10).

7. Plaque selon l'une des revendications précédentes, **caractérisée en ce**
**que** le corps de base (2) présente une stabilité à la température d'au moins 170 °C.

8. Plaque selon l'une des revendications précédentes, **caractérisée en ce**
**que** le corps de base (2) présente un thermoplastique comme matière plastique.

9. Plaque selon la revendication 8, **caractérisée en ce**
**que** le corps de base (2) présente un polyamide comme matière plastique.

10. Plaque selon l'une des revendications précédentes, **caractérisée en ce**
**que** la plaque (1) présente des dimensions pour l'essentiel de 42 x 110 mm.

11. Plaque selon l'une des revendications précédentes, **caractérisée en ce**
**que** la plaque (1) présente une épaisseur d'au maximum 4 mm.

12. Plaque selon la revendication 11, **caractérisée en ce**
**que** la plaque (1) présente une épaisseur d'au maximum 2,5 mm.

13. Plaque selon l'une des revendications précédentes, **caractérisée en ce**
**que** la puce RFID (6) est configurée utilisable en écriture, de sorte qu'une information lisible librement définissable peut être écrite dans la puce RFID (6), en plus d'un numéro de série individuel de la puce RFID (6) inscrit le cas échéant par le fabricant de la puce RFID (6) dans la puce RFID (6).

14. Plaque selon l'une des revendications précédentes, **caractérisée en ce**
**que** le corps de base (2) présente deux alésages de passage (7) qui s'étendent du recto (3) vers le verso (5) du corps de base (2).
